# EUROPÄISCHE PATENTSCHRIFT

(11) **EP 2 560 855 B1**
(45) Veröffentlichungstag und Bekanntmachung des Hinweises auf die Patenterteilung: **19.04.2017**
(21) Anmeldenummer: 11709039.9
(22) Anmeldetag: 02.03.2011
(51) Int. Cl.: B60W 30/18, B60W 10/10, B60W 10/02, B60W 10/06, B60W 20/00

(54) **VERFAHREN ZUR ANFAHRSTEUERUNG EINES KRAFTFAHRZEUGS**
METHOD FOR CONTROLLING THE STARTING OF A MOTOR VEHICLE
PROCÉDÉ DE COMMANDE DE DÉMARRAGE D'UN VÉHICULE À MOTEUR

(30) Priorität: 22.04.2010 DE 102010028072
(43) Veröffentlichungstag der Anmeldung: 27.02.2013
(73) Patentinhaber: ZF Friedrichshafen AG, 88046 Friedrichshafen (DE)
(72) Erfinder: MAIR, Roland, 88069 Tettnang (DE)
(86) Internationale Anmeldenummer: PCT/EP2011/053112
(87) Internationale Veröffentlichungsnummer: WO 2011/131405

(56) Entgegenhaltungen:
- EP-A2- 1 070 625
- EP-A2- 1 354 751
- DE-A1- 10 139 122
- DE-A1-102007 019 729

## Beschreibung

Die Erfindung betrifft ein Verfahren nach dem Oberbegriff des Anspruchs 1 zur Anfahrsteuerung eines Kraftfahrzeugs, dessen Antriebsstrang einen als turboaufgeladener Verbrennungsmotor ausgebildeten Antriebsmotor, ein als automatisierte Reibungskupplung ausgebildetes Anfahrelement, und ein als automatisiertes Stufenschaltgetriebe ausgebildetes Fahrgetriebe umfasst, wobei bei einem durch die Betätigung des Fahrpedals ausgelösten Anfahren aus dem Stillstand nach dem Einlegen eines ermittelten Anfahrgangs der Antriebsmotor in Verbindung mit einem koordinierten Einrücken der Reibungskupplung von der Leerlaufdrehzahl auf eine Anfahrdrehzahl und von dem Leerlaufmoment auf ein ermitteltes Anfahrmoment geführt wird.

In Kraftfahrzeugen kommen immer häufiger automatisierte Stufenschaltgetriebe mit mindestens einer automatisierten Reibungskupplung als Anfahrelement zur Anwendung, bei denen die Gangwahl, die Auslösung von Schaltvorgängen, das Ein- und Auslegen der Gangstufen, sowie das Ein- und Ausrücken der Reibungskupplung automatisiert, d.h. durch die Auswertung von Betriebsparametern in einem Getriebesteuergerät und die Ansteuerung zugeordneter Stellantriebe, erfolgen.

Beim Anfahren aus dem Stillstand wird die Reibungskupplung, bei der es sich um eine passiv schließbare Ein- oder Mehrscheiben-Trockenkupplung oder um eine aktiv schließbare Lamellenkupplung handeln kann, zur Überbrückung der Drehzahldifferenz zwischen der Motordrehzahl und der Getriebeeingangsdrehzahl (Drehzahl an der Eingangswelle des Stufenschaltgetriebes) im Schlupf betrieben, bis das Kraftfahrzeug so weit beschleunigt hat, dass an der Reibungskupplung Synchronlauf vorliegt und diese vollständig geschlossen werden kann.

Der anfahrbedingte Schlupfbetrieb stellt für die Reibungskupplung eine große thermische und mechanische Belastung dar, die mit der Höhe des Anfahrmomentes, der Höhe der Schlupfdrehzahl, und der Dauer der Schlupfphase zunimmt sowie einen wesentlichen Parameter zur Bestimmung des Anfahrgangs bildet.

Zudem muss das von dem Antriebsmotor abgebbare Motormoment (Anfahrmoment) ausreichend hoch sein, um bei der durch den ausgewählten Anfahrgang bestimmten Gesamtübersetzung und dem Wirkungsgrad des Antriebsstrangs den stationären Fahrwiderstand des Kraftfahrzeugs (Rollwiderstand plus Steigungswiderstand) zu überwinden sowie um zusätzlich eine zumindest minimale Anfahrbeschleunigung des Kraftfahrzeugs (dynamischer Fahrwiderstand) zu ermöglichen.

Auch ist beim Anfahren zu beachten, dass aktive abtriebsseitige, d.h. an dem Fahrgetriebe und/oder dem Achsgetriebe angeordnete Nebenabtriebe das für das Anfahren nutzbare Motormoment reduzieren, welches bei der Ermittlung des Anfahrgangs als fiktiver Zusatzwiderstand berücksichtigt werden kann. Dagegen reduzieren von dem Antriebsmotor unmittelbar angetriebenen Nebenaggregate, wie ein elektrischer Generator, eine Servopumpe einer Servolenkung, und ein Klimakompressor einer Klimaanlage, sowie aktive antriebsseitige, d.h. unmittelbar an dem Antriebsmotor angeordnete Nebenabtriebe, das von dem Antriebsmotor an der Reibungskupplung abgebbare und somit für das Anfahren verfügbare Motormoment schon an der Drehmomentquelle.

Um viele nacheinander folgende, jeweils mit einer Zugkraftunterbrechung verbundene Schaltvorgänge zu vermeiden, wird allgemein angestrebt, das Anfahren eines Kraftfahrzeugs in einer möglichst hohen Gangstufe durchzuführen, ohne dabei jedoch die Reibungskupplung thermisch zu überlasten.

So sind aus der DE 198 39 837 A1 und der US 6 953 410 B2 Verfahren zur Ermittlung eines Anfahrgangs bekannt, bei denen aus dem aktuellen Fahrwiderstand des Kraftfahrzeugs und dem verfügbaren Motormoment des Antriebsmotors der höchstmögliche Anfahrgang derart bestimmt wird, dass die während des Anfahrens zu erwartende Schlupfdauer der Reibungskupplung und/oder die im Schlupfbetrieb in die Reibungskupplung eingetragene Wärmeenergie vorgegebene Grenzwerte nicht übersteigen.

In der US 7 220 215 B2 ist ein Nutzfahrzeug mit einer Steuerungseinrichtung beschrieben, mit welcher der höchstmögliche Anfahrgang derart bestimmt wird, dass das von dem Antriebsmotor bei der Leerlaufdrehzahl maximal erzeugbare Motormoment für das Anfahren ausreicht, und die dabei in die Reibungskupplung eingetragene Wärmeenergie einen vorgegebenen Grenzwert nicht überschreitet.

Ein typischer Verfahrensablauf zur Ermittlung eines Anfahrgangs sowie des Anfahrmomentes und der Anfahrdrehzahl des Antriebsmotors ist der DE 10 2007 019 729 A1 zu entnehmen. Ein dazu alternatives Verfahren zur Ermittlung eines Anfahrgangs nach der DE 10 2007 031 725 A1, mit dem die Nutzung applikationsaufwendiger Kennlinien und Kennfelder vermieden wird, sieht dagegen vor, dass aus dem aktuellen Fahrwiderstand, dem verfügbaren Motormoment und einer angenommenen Mindest-Anfahrbeschleunigung eine Mindest-Anfahrübersetzung berechnet und daraus der höchstmögliche Anfahrgang bestimmt wird.

Insbesondere bei Nutzfahrzeugen sind die Antriebsmotoren zumeist als von einem Turbolader aufladbare Dieselmotoren ausgebildet, die eine spezielle Lastaufbaucharakteristik aufweisen. Wie in der nachveröffentlichten DE 10 2008 054 802, die ein Verfahren zur Steuerung eines automatisierten Stufenschaltgetriebes in Abhängigkeit von den dynamischen Betriebseigenschaften eines turboaufgeladenen Verbrennungsmotors beschreibt, näher erläutert ist, kann ein turboaufgeladener Verbrennungsmotor spontan, d.h. mit hohem Drehmomentgradienten, nur ein unterhalb des Volllastmomentes liegendes Saugmoment erreichen. Eine weitere Erhöhung des Motormomentes ist, wenn auch mit geringerem Drehmomentgradienten, kurzfristig nur oberhalb einer Ladegrenzdrehzahl möglich, ab welcher der Turbolader eine deutliche Erhöhung des Ladedrucks und damit des Motormomentes bewirkt. Das dynamische Verhalten eines turboaufgeladenen Verbrennungsmotors ist somit außer durch die Leerlaufdrehzahl, die Abregeldrehzahl und die Volllastmoment-Kennlinie auch durch die Ladegrenzdrehzahl und die Saugmoment-Kennlinie sowie die bereichsweise vorliegenden Momentengradienten bestimmt.

Bei den bislang bekannten Verfahren zur Anfahrsteuerung von Kraftfahrzeugen werden die dynamischen Betriebseigenschaften der Antriebsmotoren nur indirekt über applikationsaufwendige und entsprechend ungenaue Kennlinien und Kennfelder berücksichtigt. Dies kann zur Folge haben, dass das zum Anfahren erforderliche Anfahrmoment bei einer zu hohen Motordrehzahl (Anfahrdrehzahl) eingestellt wird, welches aufgrund der hohen Schlupfdrehzahl eine erhöhte thermische und mechanische Belastung der Reibungskupplung bewirkt. Ebenso kann zum Anfahren eine zu niedrige Motordrehzahl (Anfahrdrehzahl) eingestellt werden, bei der das zum Anfahren erforderliche Anfahrmoment durch den Antriebsmotor nicht spontan erzeugt werden kann, so dass entweder der Anfahrvorgang abgebrochen werden muss, oder während des Anfahrens in einen niedrigeren Anfahrgang geschaltet werden muss, oder das Anfahrmoment unter Verlängerung der Schlupfphase der Reibungskupplung nur stark verzögert erreicht wird.

Der Erfindung liegt daher die Aufgabe zugrunde, ein Verfahren zur Anfahrsteuerung eines Kraftfahrzeugs der eingangs genannten Art vorzuschlagen, bei dem die dynamischen Betriebseigenschaften eines als turboaufgeladener Verbrennungsmotor ausgebildeten Antriebsmotors unmittelbar berücksichtigt werden.

Diese Aufgabe ist erfindungsgemäß in Verbindung mit den eingangs genannten Merkmalen des Oberbegriffs des Anspruchs 1 dadurch gelöst, dass die Leerlaufdrehzahl des Antriebsmotors oder eine geringfügig über der Leerlaufdrehzahl liegende Motordrehzahl als Anfahrdrehzahl bestimmt und eingestellt wird, wenn das ermittelte Anfahrmoment das Saugmoment des Antriebsmotors nicht übersteigt bzw. dass bei einer betriebsbedingt von dem Antriebsmotor einzuhaltenden Mindestdrehzahl, die über der Leerlaufdrehzahl des Antriebsmotors liegt, diese Mindestdrehzahl oder eine geringfügig über dieser Mindestdrehzahl liegende Motordrehzahl als Anfahrdrehzahl bestimmt und eingestellt wird, wenn das ermittelte Anfahrmoment das Saugmoment des Antriebsmotors nicht übersteigt.

Die Aufgabe wird ebenfalls durch ein Verfahren mit den Merkmalen des Anspruchs 2 gelöst, wobei der Antriebsmotor zunächst bis an die Ladegrenzdrehzahl oder eine geringfügig über der Ladegrenzdrehzahl liegende Motordrehzahl beschleunigt und bis an das Saugmoment belastet wird, sowie anschließend bei weitgehend konstanter Motordrehzahl bis nahe an das Volllastmoment belastet wird, wenn das ermittelte Anfahrmoment das Saugmoment des Antriebsmotors übersteigt, und dass die weitere Drehzahlführung des Antriebsmotors in Abhängigkeit von der Abweichung des aktuellen Motormomentes von dem ermittelten Anfahrmoment erfolgt.

Vorteilhafte Ausgestaltungen und Weiterbildungen des erfindungsgemäßen Verfahrens sind Gegenstand der Unteransprüche.

Die Erfindung geht demnach aus von einem an sich bekannten Kraftfahrzeug, beispielsweise einem Nutzfahrzeug, dessen Antriebsstrang einen als turboaufgeladener Verbrennungsmotor ausgebildeten Antriebsmotor, ein als automatisierte Reibungskupplung ausgebildetes Anfahrelement, und ein als automatisiertes Stufenschaltgetriebe ausgebildetes Fahrgetriebe umfasst. Bei einem aktiven Anfahren aus dem Stillstand, das durch die Betätigung des Fahrpedals durch den Fahrer ausgelöst wird und in der Ebene oder an einer Steigung stattfindet, wird der Verbrennungsmotor bei zunächst geöffneter Reibungskupplung nach dem Einlegen eines ermittelten Anfahrgangs in Verbindung mit einem koordinierten Einrücken der Reibungskupplung von der Leerlaufdrehzahl n_{idle} auf eine Anfahrdrehzahl n_{Anf} und von dem Leerlaufmoment M_{idle} auf ein ermitteltes Anfahrmoment M_{Anf} geführt, bis das Kraftfahrzeug so weit beschleunigt hat, dass an der Reibungskupplung Synchronlauf vorliegt und diese vollständig geschlossen wird. Die weitere Steuerung des Antriebsmotors und des Stufenschaltgetriebes erfolgt dann in Abhängigkeit von der Fahrpedalstellung und/oder von dem Änderungsgradienten der Fahrpedalstellung.

Das erfindungsgemäße Verfahren zur Anfahrsteuerung sieht nun eine unmittelbare Berücksichtigung der dynamischen Betriebseigenschaften des Antriebsmotors vor, und zwar derart, dass die niedrigstmögliche Motordrehzahl n_{M}, die von der Leerlaufdrehzahl n_{idle} aus unter Last spontan einstellbar ist, und bei welcher der Antriebsmotor das ermittelte Anfahrmoment M_{Anf} erzeugen kann, als Anfahrdrehzahl n_{Anf} bestimmt und eingestellt wird.

Somit wird mit der niedrigstmöglichen Motordrehzahl n_{M} bzw. der niedrigstmöglichen Schlupfdrehzahl (Δn_{K} = n_{M} - n_{GE}) an der Reibungskupplung angefahren, bei welcher das zum Anfahren erforderliche Anfahrmoment M_{Anf} von dem Antriebsmotor spontan aufgebaut und abgegeben werden kann. Daher ist das Anfahren unter normalen Betriebsbedingungen zumeist problemlos möglich und erfolgt jeweils mit der geringstmöglichen thermischen und mechanischen Belastung der Reibungskupplung.

Die die dynamischen Betriebseigenschaften des Verbrennungsmotors repräsentierenden Daten können entweder unmittelbar dem Motorsteuergerät oder einem Datenspeicher des Getriebesteuergerätes entnommen werden. Wie schon in der DE 10 2008 054 802 beschrieben ist, können die betreffenden Daten am Ende der Fertigungsstrecke des Kraftfahrzeugs entsprechend der Fahrzeugkonfiguration auf den Datenspeicher des Getriebesteuergerätes übertragen und während des späteren Fahrbetriebs durch den Abgleich mit aktuellen Betriebsdaten insbesondere des Antriebsmotors adaptiert, d.h. an geänderte Betriebseigenschaften angepasst werden. Durch den Zugriff auf die derart aktualisierten Daten passt sich auch das vorliegende Verfahren zur Anfahrsteuerung selbsttätig an geänderte Betriebseigenschaften des Kraftfahrzeugs bzw. des Antriebsmotors an.

Entsprechend der vorgenannten Verfahrensstrategie wird die Leerlaufdrehzahl n_{idle} des Antriebsmotors oder eine geringfügig über der Leerlaufdrehzahl n_{idle} liegende Motordrehzahl (n_{M} = n_{idle} + Δn_{M}) als Anfahrdrehzahl n_{Anf} bestimmt und eingestellt (n_{Anf} = n_{idle}; n_{Anf} = n_{idle} + Δn_{M}), wenn das ermittelte Anfahrmoment M_{Anf} das Saugmoment M_{S} des Antriebsmotors nicht übersteigt (M_{Anf} ≤ M_{S}), da die Leerlaufdrehzahl n_{idle} in diesem Fall die niedrigste Motordrehzahl ist, bei der das Anfahrmoment M_{Anf} an dem Antriebsmotor spontan eingestellt werden kann.

Das Saugmoment Mₛ des Antriebsmotors wird vorliegend in Übereinstimmung mit der Praxis als konstant angesehen, es kann bei größeren Abweichungen ohne eine Beeinträchtigung des Verfahrens jedoch auch als Funktion der Motordrehzahl n_{M} behandelt werden (M_{S} = f(n_{M})). Die Drehzahlerhöhung Δn_{M} kann in der Größenordnung von 50 min⁻¹ bis 100 min⁻¹ liegen und dient einem besseren Rundlauf des Antriebsmotors sowie als Steuerungsreserve zur Vermeidung eines Abrutschens der Motordrehzahl n_{M} unter die Leerlaufdrehzahl n_{idle} und demzufolge zur Vermeidung eines Absterbens des Antriebsmotors. Bei Vorliegen eines niedrigeren Anfahrmomentes (M_{Anf} < M_{S}) kann dennoch das höhere Saugmoment M_{S} als Anfahrmoment M_{Anf} eingestellt werden (M_{Anf} = M_{S}), da der im Hinblick auf die Belastung der Reibungskupplung negative Effekt des höheren Anfahrmomentes M_{Anf} durch den positiven Effekt der kürzeren Schlupfdauer ausgeglichen wird.

Unter bestimmten Betriebsbedingungen, wie z.B. einer aktivierten Löschpumpe eines Feuerwehrfahrzeugs (Löschen während der langsamen Fahrt) oder einer aktiven Betonpumpe eines Betonmischfahrzeugs zum Ablegen einer Betonraupe, muss der Antriebsmotor jedoch eine Mindestdrehzahl nₘᵢₙ einhalten, die über der Leerlaufdrehzahl n_{idle} liegt (nₘᵢₙ > n_{idle}). In diesem Fall, d.h. bei einer betriebsbedingt von dem Antriebsmotor einzuhaltenden Mindestdrehzahl nₘᵢₙ, die über der Leerlaufdrehzahl n_{idle} des Antriebsmotors liegt (nₘᵢₙ > n_{idle}), ist in Erweiterung des Verfahrens vorgesehen, dass diese Mindestdrehzahl nₘᵢₙ oder eine geringfügig über dieser Mindestdrehzahl nₘᵢₙ liegende Motordrehzahl (n_{M} = nₘᵢₙ + Δn_{M}) als Anfahrdrehzahl n_{Anf} bestimmt und eingestellt wird (n_{Anf} = nₘᵢₙ; n_{Anf} = nₘᵢₙ + Δn_{M}), wenn das ermittelte Anfahrmoment M_{Anf} das Saugmoment Ms des Antriebsmotors nicht übersteigt (M_{Anf} ≤ M_{S}).

Wenn das ermittelte Anfahrmoment M_{Anf} jedoch das Saugmoment M_{S} des Antriebsmotors übersteigt (M_{Anf} > M_{S}), ist erfindungsgemäß vorgesehen, dass der Antriebsmotor zunächst bis an die Ladegrenzdrehzahl n_{L_min} oder eine geringfügig über der Ladegrenzdrehzahl n_{L_min} liegende Motordrehzahl n_{M} beschleunigt (n_{M} = n_{L_min} ; n_{M} = n_{L_min} + Δn_{M}) und bis an das Saugmoment M_{S} belastet wird, sowie anschließend bei weitgehend konstanter Motordrehzahl (n_{M} ≈ n_{L_min}) bis nahe an das Volllastmoment M_{VL}(n_{L_min}) belastet wird, und dass die weitere Drehzahlführung des Antriebsmotors in Abhängigkeit von der Abweichung des aktuellen Motormomentes (M_{M} ≈ M_{VL}(n_{L_min})) von dem ermittelten Anfahrmoment M_{Anf} erfolgt.

Die Beschleunigung des Antriebsmotors bis an die Ladegrenzdrehzahl n_{L_min} oder eine um eine Drehzahlerhöhung Δn_{M} von etwa 50 min⁻¹ bis 100 min⁻¹ über der Ladegrenzdrehzahl n_{L_min} liegende Motordrehzahl (n_{M} = n_{L_min} + Δn_{M}) ist in diesem Fall nötig, da eine weitere Erhöhung des Motormomentes M_{M} kurzfristig nur oberhalb der Ladegrenzdrehzahl n_{L_min} möglich ist. Die optional mögliche Drehzahlerhöhung Δn_{M} dient als Steuerungsreserve zum Ausgleich von Signalungenauigkeiten und Störungen, durch die ein Absinken der Motordrehzahl n_{M} unter die Ladegrenzdrehzahl n_{L_min} und ein dadurch verursachter Rückfall des Motormomentes M_{M} auf das Saugmoment M_{S} vermieden werden.

Nach dem Erreichen des Volllastmomentes M_{VL}(n_{L_min}) wird der Antriebsmotor während der Schlupfphase der Reibungskupplung auf der aktuellen Motordrehzahl (n_{M} = n_{L_min}; n_{M} = n_{L_min} + Δn_{M}) und dem aktuellen Motormoment (M_{M} ≈ M_{VL}(n_{L_min})) gehalten, wenn das aktuelle Motormoment M_{VL}(n_{L_min}) weitgehend dem ermittelten Anfahrmoment M_{Anf} entspricht (M_{Anf} ≈ M_{VL}(n_{L_min})).

Diese Vorgehensweise ist auch bei niedrigerem Anfahrmoment (M_{S} < M_{Anf} < M_{VL}) vorteilhaft, weil das Motormoment M_{M} in diesem Bereich bei sinkender Schlupfdrehzahl Δn_{K} an der Reibungskupplung schwierig konstant regelbar ist, und daher bei auftretenden Drehmomentschwankungen die Gefahr eines Unterschreitens der Ladegrenzdrehzahl n_{L_min} und eines Rückfalls des Motormomentes M_{M} auf das Saugmoment M_{S} besteht. Zudem wird der im Hinblick auf die Belastung der Reibungskupplung negative Effekt des erhöhten Anfahrmomentes (M_{Anf} ≈ M_{VL}(n_{L_min})) durch den positiven Effekt der kürzeren Schlupfdauer ausgeglichen.

Wenn das aktuelle Motormoment M_{VL}(n_{L_min}) jedoch deutlich über dem ermittelten Anfahrmoment M_{Anf} liegt (M_{Anf} < M_{VL}(n_{L_min})), wird der Antriebsmotor durch ein weiteres Schließen der Reibungskupplung entlang der Volllastkennlinie M_{VL}(n_{M}) auf eine niedrigere Motordrehzahl (n_{M} < n_{L_min}) und ein niedrigeres Motormoment (M_{M} < M_{VL}(n_{L_min})) gedrückt, da die Belastung der Reibungskupplung durch die derart abgesenkte Anfahrdrehzahl n_{Anf} und das abgesenkte Anfahrmoment M_{Anf} deutlich reduziert wird. Da die Absenkung der Anfahrdrehzahl n_{Anf} und des Anfahrmomentes M_{Anf} bei Volllast des Antriebsmotors nur durch eine moderate Erhöhung des von der Reibungskupplung übertragenen Drehmomentes M_{K} erfolgt, kommt es dabei zu keinem Rückfall des Motormomentes M_{M} auf das Saugmoment M_{S}. Beim Betrieb eines turboaufgeladenen Verbrennungsmotors an seiner durch die Volllastkennlinie gegebenen Volllastgrenze ist das aus dem Verbrennungsmotor und dem Turbolader gebildete System stabil. Demnach bricht der Ladedruck des Verbrennungsmotors mit sinkender Motordrehzahl n_{M} nicht ein, und es erfolgt kein Rückfall des Motormomentes M_{M} auf des Saugmoment M_{S}.

Wenn das aktuelle Motormoment M_{VL}(n_{L_min}) dagegen deutlich unter dem ermittelten Anfahrmoment M_{Anf} liegt (M_{Anf} > M_{VL}(n_{L_min})), wird der Antriebsmotor durch eine Erhöhung der Motorleistung und ein weiteres Schließen der Reibungskupplung auf eine höhere Motordrehzahl (n_{M} > n_{L_min}) sowie ein höheres Motormoment (M_{M} > M_{VL}(n_{L_min})) eingestellt, um den Anfahrvorgang mit der vorgesehenen Anfahrbeschleunigung und einer begrenzten Belastung der Reibungskupplung durchführen zu können.

Der Betrieb insbesondere von antriebsseitigen Nebenabtrieben kann die Einhaltung einer unter der vorgesehenen Anfahrdrehzahl n_{Anf} liegenden Maximaldrehzahl nₘₐₓ (nₘₐₓ < n_{Anf}) durch den Antriebsmotor erfordern, so dass dieser ohne Anpassungsmaßnahmen ein für ein Anfahren erforderliches Motormoment M_{M} nicht erreichen kann. Ein Anfahren ist prinzipiell dann möglich, wenn das an der Reibungskupplung anliegende Motormoment M_{M} das durch die Rückrechnung des Fahrwiderstands mit der Gesamtübersetzung und dem Wirkungsgrad des Antriebsstrangs auf die Eingangswelle ermittelbare Fahrwiderstandsmoment M_{FW} zur Ermöglichung einer minimalen Anfahrbeschleunigung zumindest geringfügig übertrifft (M_{M} > M_{FW}). Um dies sicherzustellen ist vorliegend vorgesehen, dass bei einer betriebsbedingt von dem Antriebsmotor einzuhaltenden Maximaldrehzahl nₘₐₓ, die unter der vorgesehenen Anfahrdrehzahl n_{Anf} des Antriebsmotors liegt (nₘₐₓ < n_{Anf}), eine Anpassung der Anfahrdrehzahl n_{Anf} und/oder des Anfahrmomentes M_{Anf} und/oder des Anfahrgangs erfolgt.

So ist es möglich, dass das Anfahren mit dem vorgesehenen Anfahrgang unter Einhaltung der Maximaldrehzahl nₘₐₓ durchgeführt wird, wenn das bei der Maximaldrehzahl nₘₐₓ maximal einstellbare Motormoment M_{M}(nₘₐₓ) für das Anfahren ausreicht (M_{M}(nₘₐₓ) > M_{FW}).

Dagegen wird bevorzugt vor dem Beginn des Anfahrvorgangs in einen niedrigeren Anfahrgang geschaltet und das Anfahren mit diesem Anfahrgang unter Einhaltung der Maximaldrehzahl nₘₐₓ durchgeführt, wenn das bei der Maximaldrehzahl nₘₐₓ maximal einstellbare Motormoment M_{M}(nₘₐₓ) in Verbindung mit dem ursprünglich vorgesehenen Anfahrgang für das Anfahren nicht ausreicht (M_{M}(nₘₐₓ) ≤ M_{FW}).

Alternativ oder ergänzend dazu kann das für die Überwindung des Anfahrwiderstands und die Ermöglichung einer zumindest minimalen Anfahrbeschleunigung verfügbare Motormoment M_{M} auch dadurch erhöht werden, dass mindestens ein Nebenaggregat und/oder ein Nebenabtrieb abgekoppelt wird, wenn das bei der Maximaldrehzahl nₘₐₓ maximal einstellbare Motormoment M_{M}(nₘₐₓ) für das Anfahren nicht ausreicht (M_{M}(nₘₐₓ) ≤ M_{FW}).

Wenn derartige Maßnahmen für die Ermöglichung eines Anfahrens nicht ausreichen, kann auch vorgesehen sein, dass das die Einhaltung der Maximaldrehzahl nₘₐₓ erfordernde Aggregat vorübergehend, z.B. für die Dauer der Schlupfphase oder bis zum Ende der ersten Hochschaltung, abgeschaltet wird, wenn das bei der Maximaldrehzahl nₘₐₓ maximal einstellbare Motormoment M_{M}(nₘₐₓ) für das Anfahren nicht ausreicht (M_{M}(nₘₐₓ) ≤ M_{FW}).

Ebenso kann in diesem Fall vorgesehen sein, dass die Maximaldrehzahl nₘₐₓ vorübergehend überschritten wird, wenn das bei der Maximaldrehzahl nₘₐₓ maximal einstellbare Motormoment M_{M}(nₘₐₓ) für das Anfahren nicht ausreicht (M_{M}(nₘₐₓ) ≤ M_{FW}).

Die Anfahrsteuerung gemäß wenigstens einem der vorgenannten Verfahrensmerkmale kann uneingeschränkt auch bei einem mit einem Parallel-Hybridantrieb oder mit einem Boostantrieb versehenen Kraftfahrzeug auf den von dem Verbrennungsmotor erzeugten Anteil des Anfahrmomentes M_{Anf} angewendet werden, wenn beim Anfahren zusätzlich zu dem Verbrennungsmotor der betreffende Parallelantrieb oder der Boostantrieb, die jeweils z.B. als ein Elektromotor oder ein Schwungradantrieb ausgebildet sein können, verwendet wird.

Wenn der Verbrennungsmotor eine variable Motorcharakteristik aufweist, die z.B. durch ein aktivierbares Pressure Boost System (PBS) mit einer Drucklufteinblasung in den Ansaugtrakt des Antriebsmotors gegeben sein kann, wird die Anfahrsteuerung gemäß wenigstens einem der vorgenannten Verfahrensmerkmale zweckmäßig an die jeweils aktuelle Motorcharakteristik angepasst. Wenn z.B. bei aktiviertem PBS die Ladegrenzdrehzahl n_{L_min} bis auf die Leerlaufdrehzahl n_{idle} oder unter die Leerlaufdrehzahl n_{idle} abgesenkt ist (n_{L_min} ≤ ni_{dle}), bedeutet dies, dass nach der Strategie des erfindungsgemäßen Verfahrens dann die Leerlaufdrehzahl n_{idle} des Antriebsmotors oder eine geringfügig über der Leerlaufdrehzahl n_{idle} liegende Motordrehzahl (n_{M} = n_{idle} + Δn_{M}) als Anfahrdrehzahl n_{Anf} bestimmt (n_{Anf} = n_{idle}; n_{Anf} = n_{idle} + Δn_{M}) und das betreffende Volllastmoment M_{VL}(n_{idle}) eingestellt wird (n_{Anf} = n_{idle}; n_{Anf} = n_{idle} + Δn_{M}), wenn das ermittelte Anfahrmoment M_{Anf} das Volllastmoment M_{VL}(n_{idle}) des Antriebsmotors nicht übersteigt (M_{Anf} ≤ M_{VL}(n_{idle})). Wenn das betreffende Volllastmoment M_{VL}(n_{idle}) dann immer noch unter dem ermittelten Anfahrmoment M_{Anf} liegt (M_{Anf} > M_{VL}(n_{idle})), wird der Antriebsmotor analog zu der zuvor beschriebenen Vorgehensweise durch eine Erhöhung der Motorleistung und ein weiteres Schließen der Reibungskupplung entlang der Volllastkennlinie M_{VL}(n_{M}) auf eine höhere Motordrehzahl (n_{M} > n_{idle}) und ein höheres Motormoment (M_{M} > M_{VL}(n_{idle})) eingestellt, um das vorgesehene Anfahrmoment M_{Anf} zu erreichen (M_{M} = M_{Anf}).

Zur Verdeutlichung der Erfindung ist der Beschreibung eine Zeichnung mit einem Ausführungsbeispiel beigefügt. In diesen zeigt
- Fig. 1: in einem Motorkennfeld eine erfindungsgemäße Drehzahl- und Drehmomentführung während eines Anfahrvorgangs bei einem unter dem Motor-Saugmoment des Antriebsmotors liegenden Anfahrmoment (M_{Anf} ≤ M_{S}),
- Fig. 2: relevante Drehzahl- und Drehmomentverläufe während eines Anfahrvorgangs nach Fig. 1,
- Fig. 3: in einem Motorkennfeld eine erfindungsgemäße Drehzahl- und Drehmomentführung während eines Anfahrvorgangs bei einem über dem Motor-Saugmoment liegenden Anfahrmoment (M_{Anf} > M_{S}),
- Fig. 4: relevante Drehzahl- und Drehmomentverläufe während eines Anfahrvorgangs nach Fig. 3,
- Fig. 5: ein Motorkennfeld eines mit einem Pressure Boost System versehenen turboaufgeladenen Verbrennungsmotors,
- Fig. 6: schematisch einen Antriebsstrang eines schweren Nutzfahrzeugs,
- Fig. 7: ein Motordynamik-Kennfeld eines turboaufgeladenen Verbrennungsmotors,
- Fig. 8a: den Drehmomentaufbau eines Verbrennungsmotors nach Fig. 7 bei einer unterhalb der Ladegrenzdrehzahl geführten Motordrehzahl (n_{M} ≤ n_{L_min}), und
- Fig. 8b: den Drehmomentaufbau eines Verbrennungsmotors nach Fig. 7 bei einer über die Ladegrenzdrehzahl geführten Motordrehzahl (n_{M} > n_{L_min}).

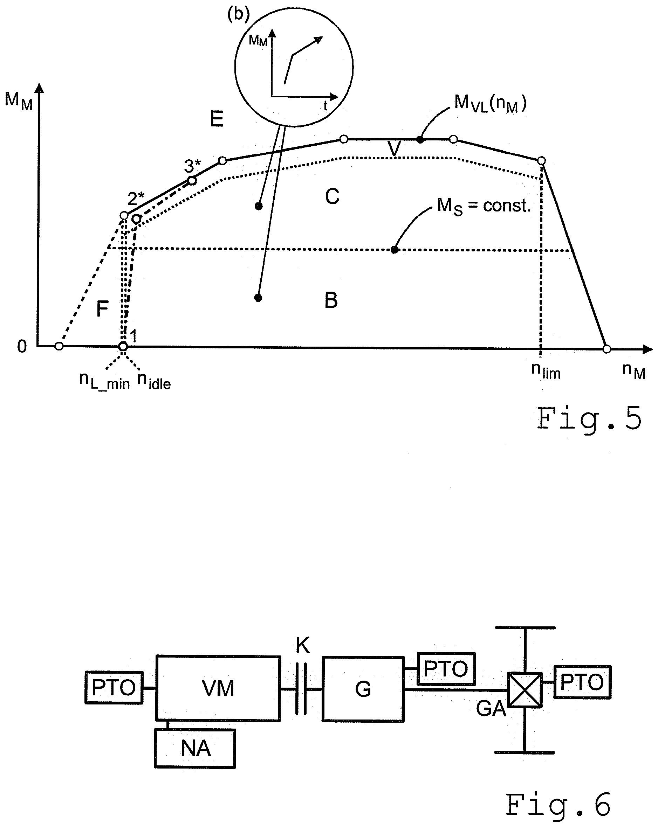

Ein in Fig. 6 schematisch abgebildeter Antriebsstrang eines schweren Nutzfahrzeugs umfasst einen als turboaufgeladenen Verbrennungsmotor VM ausgebildeten Antriebsmotor, ein als automatisierte Reibungskupplung K ausgebildetes Anfahrelement, und ein als automatisiertes Stufenschaltgetriebe G ausgebildetes Fahrgetriebe. Das Stufenschaltgetriebe G ist eingangsseitig über die Reibungskupplung K mit der Triebwelle (Kurbelwelle) des Verbrennungsmotors VM verbindbar und steht ausgangsseitig über eine Kardanwelle mit dem Achsgetriebe GA (Achsdifferenzial) einer Antriebsachse in Verbindung.

An dem Verbrennungsmotor VM ist mindestens ein Nebenaggregat NA und ein antriebsseitiger Nebenabtrieb PTO angeordnet, die im angetriebenen Zustand das von dem Verbrennungsmotor VM an der Reibungskupplung abgebbare und für einen Anfahrvorgang verfügbare Motormoment M_{M} reduzieren. Mindestens zwei weitere abtriebsseitige Nebenabtriebe PTO sind an dem Stufenschaltgetriebe G und dem Achsgetriebe GA angeordnet und reduzieren das über die Reibungskupplung K in das Stufenschaltgetriebe G und bzw. in das Achsgetriebe GA eingeleitete Motormoment M_{M} weiter, so dass bei einem Anfahrvorgang an den Antriebsrädern der Antriebsachse ein entsprechend reduziertes Drehmoment für die Überwindung des Fahrwiderstands und die Erzielung einer zumindest minimalen Anfahrbeschleunigung wirksam ist.

Der Verbrennungsmotor VM muss somit bei einem Anfahrvorgang kurzfristig ein Motormoment M_{M} erzeugen und an der Reibungskupplung K abgeben können, das abzüglich der Antriebsmomente für die Nebenaggregate NA und die antriebsseitigen Nebenabtriebe PTO ausreicht, um mit einer akzeptablen Anfahrbeschleunigung anfahren zu können. Hierzu muss das von der Reibungskupplung K übertragene Motormoment M_{M} so hoch sein, dass es abzüglich der Antriebsmomente für die abtriebsseitigen Nebenabtriebe PTO das aus dem aktuellen Fahrwiderstand resultierende, d.h. mit der Gesamtübersetzung und dem Wirkungsgrad des Antriebsstrangs auf die Eingangswelle des Stufenschaltgetriebes G reduzierte Fahrwiderstandsmoment M_{FW} so weit übertrifft, dass das überschüssige Drehmoment zumindest für eine minimale Anfahrbeschleunigung ausreicht.

In der vorliegenden Erfindung werden die Verfahren zur Ermittlung eines hierzu geeigneten Anfahrgangs und des benötigten Anfahrmomentes M_{Anf} als bekannt vorausgesetzt. Das erfindungsgemäße Verfahren beschäftigt sich dagegen damit, wie bei einem durch die Betätigung des Fahrpedals ausgelösten Anfahrvorgang aus dem Stillstand nach dem Einlegen eines ermittelten Anfahrgangs der Antriebsmotor in Verbindung mit einem koordinierten Einrücken der Reibungskupplung K von der Leerlaufdrehzahl n_{idle} auf eine Anfahrdrehzahl n_{Anf} und von dem Leerlaufmoment M_{idle} auf ein ermitteltes Anfahrmoment M_{Anf} geführt wird.

Erfindungsgemäß erfolgt dies in Abhängigkeit von der dynamischen Betriebseigenschaften des Antriebsmotors derart, dass die niedrigstmögliche Motordrehzahl n_{M}, die spontan realisierbar ist, und bei der der Antriebsmotor das ermittelte Anfahrmoment M_{Anf} erzeugen kann, als Anfahrdrehzahl n_{Anf} bestimmt und eingestellt wird.

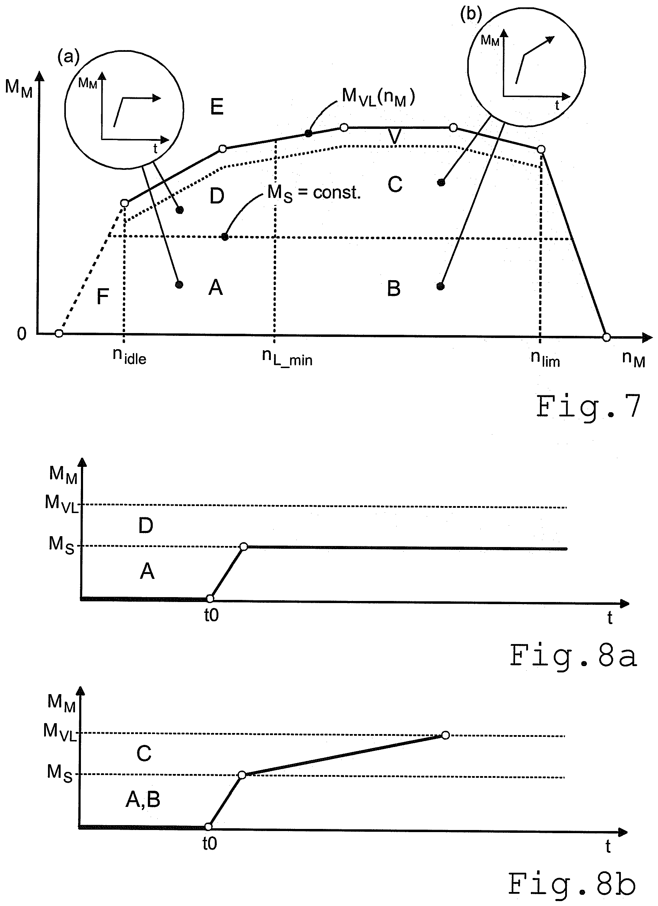

Die dynamischen Betriebseigenschaften eines als turboaufgeladenen Verbrennungsmotor VM ausgebildeten Antriebsmotors können einem aus der DE 10 2008 054 802 bekannten Motordynamik-Kennfeld entnommen werden, das in einem Datenspeicher des Getriebesteuergerätes abgelegt sein kann und beispielhaft in Fig. 7 abgebildet ist.

Das in Fig. 7 in einem Drehmoment-Drehzahl-Diagramm dargestellte Motordynamik-Kennfeld enthält das spontan abrufbare Maximalmoment Mₘₐₓ des Verbrennungsmotors VM und den maximalen Momentengradienten (*d*M_{M}/*d*t)ₘₐₓ, mit dem das spontan abrufbare Maximalmoment Mₘₐₓ des Verbrennungsmotors VM schnellstmöglich erreichbar ist, jeweils als Funktion des aktuellen Motormomentes M_{M} und der aktuellen Motordrehzahl n_{M} (Mₘₐₓ = f(M_{M}, n_{M}), (*d*M_{M}/*d*t)ₘₐₓ = f(M_{M}, n_{M})).

Das Motordynamik-Kennfeld gemäß Fig. 7 ist begrenzt durch die stationäre Volllast-Drehmomentkennlinie M_{VL}(n_{M}), die Nullmomentlinie (M_{M} = 0), die Leerlaufdrehzahl n_{idle} und die Abregeldrehzahl nₗᵢₘ des Verbrennungsmotors VM. Durch die Saugmomentkennlinie M_{S}(n_{M}) des hier vereinfacht als konstant angenommenen Saugmomentes M_{S} = const. und die Ladegrenzdrehzahl n_{L_min} des Verbrennungsmotors VM ist das Motordynamik-Kennfeld zudem in vier Betriebsbereiche A, B, C, D unterteilt.

In dem unterhalb der Saugmomentkennlinie M_{S} = const. und unterhalb der Ladegrenzdrehzahl n_{L_min} liegenden ersten Betriebsbereich A (0 ≤ M_{M} < M_{S}, n_{idle} ≤ n_{M} < n_{L_min}) wird das spontan abrufbare Maximalmoment Mₘₐₓ(n_{M}) des Verbrennungsmotors VM jeweils durch den entsprechenden Wert des Saugmomentes M_{S} gebildet (Mₘₐₓ(n_{M}) = M_{S}). Da das Saugmoment M_{S} in diesem Bereich konstant ist (M_{S} = const.), wird das spontan abrufbare Maximalmoment Mₘₐₓ des Verbrennungsmotors VM durch einen einzigen Wert repräsentiert (Mₘₐₓ = M_{S} = const.). Unabhängig davon kann auch der in diesem Bereich sehr hohe maximale Momentengradient (*d*M_{M}/*d*t)ₘₐₓ im Betriebsbereich A durch einen einzigen Wert gegeben sein.

In dem unterhalb der Saugmomentkennlinie M_{S} = const. und oberhalb der Ladegrenzdrehzahl n_{L_min} liegenden zweiten Betriebsbereich B (0 ≤ M_{M} < M_{S}, n_{L_min} ≤ n_{M} ≤ nₗᵢₘ) wird das spontan abrufbare Maximalmoment Mₘₐₓ(n_{M}) des Verbrennungsmotors VM jeweils ebenfalls durch den entsprechenden Wert des Saugmomentes M_{S} gebildet. Da das Saugmoment M_{S} auch in diesem Betriebsbereich einen konstanten Verlauf aufweist (M_{S} = const.), wird das spontan abrufbare Maximalmoment Mₘₐₓ des Verbrennungsmotors VM in Betriebsbereich B ebenfalls durch einen einzigen Wert repräsentiert (Mₘₐₓ = M_{S} = const.). Wie schon in Betriebsbereich A kann auch in Betriebsbereich B der unterhalb der Saugmomentkennlinie M_{S} = const. sehr hohe maximale Momentengradient (*d*M_{M}/*d*t)ₘₐₓ durch einen einzigen Wert gegeben sein.

In dem an den Betriebsbereich B angrenzenden, oberhalb der Saugmomentkennlinie M_{S} = const. und oberhalb der Ladegrenzdrehzahl n_{L_min} liegenden dritten Betriebsbereich C (M_{S} ≤ M_{M} < M_{VL}(n_{M}), n_{L_min} ≤ n_{M} ≤ nₗᵢₘ) ist eine weitere Erhöhung des Motormomentes M_{M} bis zu dem jeweiligen Wert der stationären Volllast-Drehmomentkennlinie M_{VL}(n_{M}) möglich, jedoch mit einem deutlich geringeren maximalen Momentengradienten (*d*M_{M}/*d*t)ₘₐₓ als in den Betriebsbereichen A und B, d.h. unterhalb der Saugmomentkennlinie M_{S} = const.

In dem an den Betriebsbereich A angrenzenden, oberhalb der Saugmomentkennlinie M_{S} = const. und unterhalb der Ladegrenzdrehzahl n_{L_min} liegenden vierten Betriebsbereich D (M_{S} ≤ M_{M} < M_{VL}(n_{M}), n_{idle} ≤ n_{M} < n_{L_min}) ist ohne eine Erhöhung der Motordrehzahl n_{M} über die Ladegrenzdrehzahl n_{L_min} eine weitere Erhöhung des Motormomentes M_{M} kurzfristig nicht möglich. Demzufolge ist im Betriebsbereich D das spontan abrufbare Maximalmoment Mₘₐₓ(n_{M}) des Verbrennungsmotors VM gleich dem entsprechenden Wert des Saugmomentes M_{S} (Mₘₐₓ(n_{M}) = Ms = const.) und der maximale Momentengradient (*d*M_{M}/*d*t)ₘₐₓ gleich Null ((*d*M_{M}/*d*t)ₘₐₓ = 0).

Oberhalb der Volllast-Drehmomentkennlinie M_{VL}(n_{M}) ist ein Betriebsbereich E definiert, der im normalen Fahrbetrieb nicht erreichbar ist. Unterhalb der Volllast-Drehmomentkennlinie M_{VL}(n_{M}) und der Leerlaufdrehzahl n_{idle} liegt ein an sich unerwünschter, aber technisch erreichbarer Betriebsbereich F, in den der Verbrennungsmotor VM von einer nahe der Leerlaufdrehzahl n_{idle} liegenden Motordrehzahl n_{M} aus, beispielsweise durch ein schnelles Schließen der Reibungskupplung K, dynamisch hineingedrückt werden kann, und in dem die Gefahr eines Absterbens des Verbrennungsmotors VM besteht. Des weiteren kann ein unmittelbar unterhalb der Volllast-Drehmomentkennlinie M_{VL}(n_{M}) liegender Nahbereich als zusätzlicher Betriebsbereich V definiert werden, in dem der Verbrennungsmotor VM unter Volllast, also entlang der Volllast-Drehmomentkennlinie M_{VL}(n_{M}), auf eine niedrigere Motordrehzahl n_{M} gedrückt oder auf eine höhere Motordrehzahl n_{M} gesteuert werden kann. Innerhalb des Betriebsbereiches V kann die Motordrehzahl n_{M} auch unter die Ladegrenzdrehzahl n_{L_min} gedrückt werden, ohne dass der Ladedruck des Verbrennungsmotors dadurch einbricht und auf das Saugmoment M_{S} zurückfällt.

Für die hier betrachteten Anfahrvorgänge, bei denen der Antriebsmotor von der Leerlaufdrehzahl n_{idle} auf eine Anfahrdrehzahl n_{Anf} und von dem Leerlaufmoment M_{idle} ≈ 0 auf das ermittelte Anfahrmoment M_{Anf} geführt werden soll, ist demnach festzuhalten, dass der Antriebsmotor spontan, d.h. mit hohem Momentengradienten *d*M_{M}/*d*t, nur bis an das Saugmoment M_{S} belastet werden kann, wenn die Motordrehzahl n_{M} unter der Ladegrenzdrehzahl n_{L_min} bleibt. Dieser Zusammenhang ist stark vereinfacht in dem Momentenverlauf M_{M}(t) in Teilbild (a) von Fig. 7 und in dem Zeitverlauf von Fig. 8a dargestellt.

Ebenso ist für die vorliegende Anfahrsteuerung festzuhalten, dass der Antriebsmotor zur spontanen Einstellung eines über dem Saugmoment M_{S} liegenden Motormomentes M_{M} über die Ladegrenzdrehzahl n_{L_min} beschleunigt werden muss, also von dem Betriebsbereich A in den Betriebsbereich B bzw. C gesteuert werden muss, da erst oberhalb der Ladegrenzdrehzahl n_{L_min}, wenn auch mit niedrigerem Momentengradienten *d*M_{M}/*d*t, eine weitere schnelle Erhöhung des Motormomentes M_{M} möglich ist. Dieser Zusammenhang ist stark vereinfacht in dem Momentenverlauf M_{M}(t) in Teilbild (b) von Fig. 7 und in dem Zeitverlauf von Fig. 8b veranschaulicht.

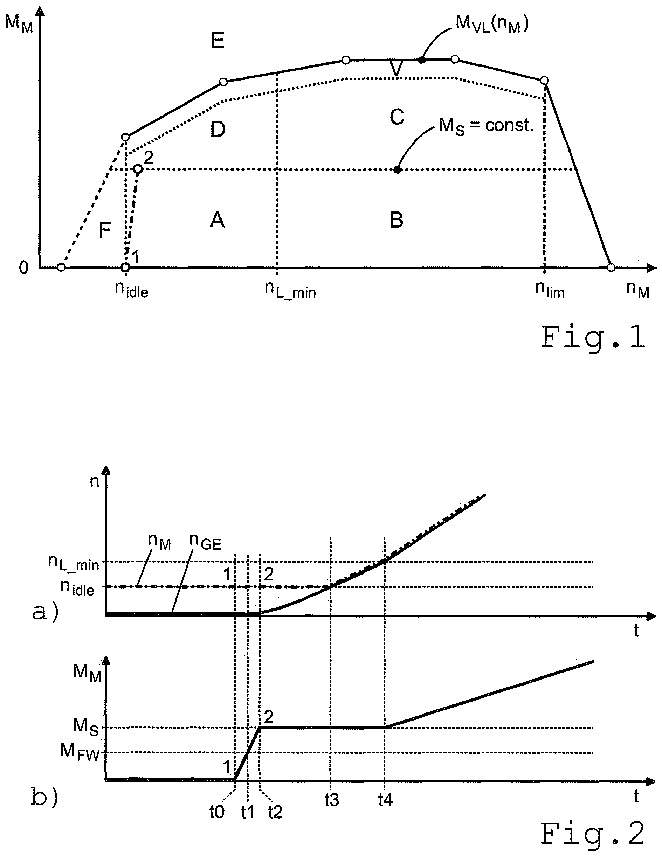

Demzufolge ist in dem vorliegenden Verfahren zur Anfahrsteuerung erfindungsgemäß vorgesehen, dass die Leerlaufdrehzahl n_{idle} des Antriebsmotors oder eine geringfügig über der Leerlaufdrehzahl n_{idle} liegende Motordrehzahl (n_{M} = n_{idle} + Δn_{M}) als Anfahrdrehzahl n_{Anf} bestimmt und eingestellt wird (n_{Anf} = n_{idle}; n_{Anf} = n_{idle} + Δn_{M}), wenn das ermittelte Anfahrmoment M_{Anf} das Saugmoment M_{S} des Antriebsmotors nicht übersteigt (M_{Anf} ≤ M_{S}). Eine entsprechende Drehzahl- und Drehmomentführung des Verbrennungsmotors VM ist in Fig. 1 in einem Motordynamik-Kennfeld mit Bezug auf Fig. 7 und in Fig. 2a und Fig. 2b mit den jeweiligen Zeitverläufen der Motordrehzahl n_{M}, der Getriebeeingangsdrehzahl n_{GE} und des Motormomentes M_{M} dargestellt.

Ausgehend von der Leerlaufdrehzahl (n_{M} = n_{idle}; und dem Leerlaufmoment (M_{M} = M_{idle} ≈ 0) zum Zeitpunkt t0 (Betriebspunkt 1) wird simultan das Motormoment M_{M}, z.B. durch eine Erhöhung der Einspritzmenge, erhöht und die Reibungskupplung K entsprechend geschlossen. Dabei kann die Motordrehzahl n_{M}, wie es in Fig. 1 dargestellt ist, auf eine geringfügig über der Leerlaufdrehzahl n_{idle} liegende Motordrehzahl (n_{M} = n_{idle} + Δn_{M}) geführt oder, wie es in Fig. 2a dargestellt ist, auf der Leerlaufdrehzahl n_{idle} gehalten werden (n_{M} = n_{idle}).

Entsprechend dem hohen Momentengradienten *d*M_{M}/*d*t wird das Motormoment M_{M} schnell erhöht, bis dieses zunächst zum Zeitpunkt t1 das Fahrwiderstandsmoment M_{FW} überschreitet und demzufolge das Kraftfahrzeug sowie die Eingangswelle des Stufenschaltgetriebes G nachfolgend beschleunigt wird, und bis dieses zum Zeitpunkt t2 (Betriebspunkt 2) das Saugmoment M_{S} erreicht. Danach wird das Kraftfahrzeug und die Eingangswelle des Stufenschaltgetriebes G mit konstantem Motormoment (M_{M} = M_{S}) weiter beschleunigt, bis zum Zeitpunkt t3 Synchronlauf an der Reibungskupplung K erreicht ist und die Reibungskupplung K vollständig geschlossen wird. Die nachfolgende Beschleunigung des Kraftfahrzeugs erfolgt zunächst weiter mit konstantem Saugmoment (M_{M} = M_{S}), bis der Verbrennungsmotor VM zum Zeitpunkt t4 die Ladegrenzdrehzahl n_{L_min} überschreitet, ab der ein erhöhter Ladedruck aufgebaut und demzufolge ein ansteigendes Motormoment M_{M} erzeugt werden kann, die eine höhere Beschleunigung des Kraftfahrzeugs bewirkt.

Eine im Betriebspunkt 2 von Fig. 1 in der Größenordnung von 50 min⁻¹ bis 100 min⁻¹ liegende Drehzahlerhöhung Δn_{M} der Motordrehzahl n_{M} über die Leerlaufdrehzahl n_{idle} bewirkt einen besseren Rundlauf des Antriebsmotors und dient als Steuerungsreserve, mit der ein Abrutschen der Motordrehzahl n_{M} unter die Leerlaufdrehzahl n_{idle} und demzufolge ein Absterben des Antriebsmotors vermieden wird.

Wenn ein unterhalb des Saugmomentes M_{S} liegendes Motormoment M_{M} als Anfahrmoment M_{Anf} ermittelt wurde (M_{Anf} < M_{S}), ist dennoch die Einstellung des höheren Saugmomentes M_{S} als Anfahrmoment M_{Anf} sinnvoll (M_{Anf} = M_{S}), da dies den Anfahrvorgang beschleunigt, und der im Hinblick auf die Belastung der Reibungskupplung K negative Effekt des höheren Anfahrmomentes (M_{Anf} = M_{S}) durch den positiven Effekt der kürzeren Schlupfdauer ausgeglichen wird.

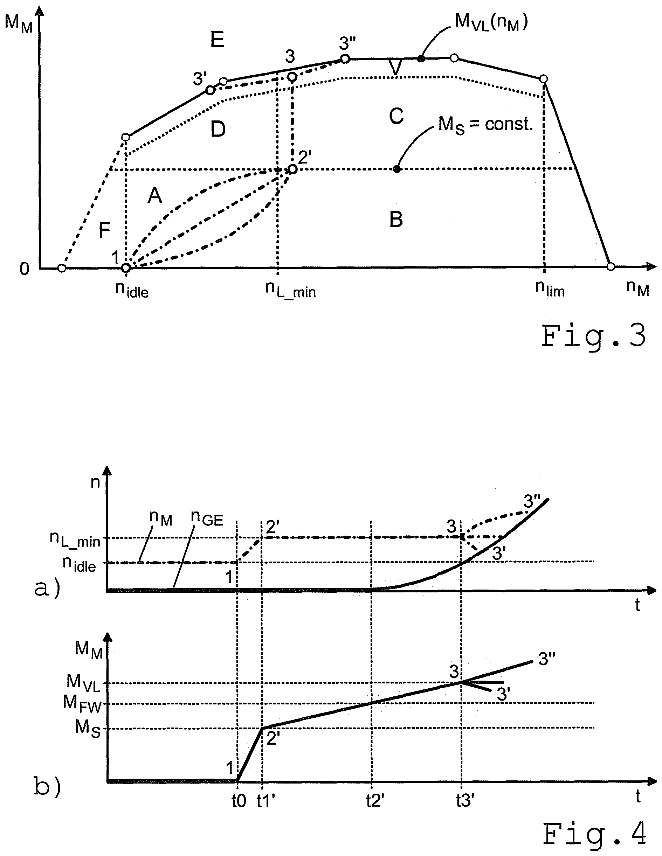

Wenn das ermittelte Anfahrmoment M_{Anf} dagegen das Saugmoment M_{S} des Antriebsmotors übersteigt (M_{Anf} > M_{S}) ist erfindungsgemäß vorgesehen, dass der Antriebsmotor zunächst bis an die Ladegrenzdrehzahl n_{L_min} oder eine geringfügig über der Ladegrenzdrehzahl n_{L_min} liegende Motordrehzahl n_{M} beschleunigt (n_{M} = n_{L_min} ; n_{M} = n_{L_min} + Δn_{M}) sowie bis an das Saugmoment M_{S} belastet wird, sowie anschließend bei weitgehend konstanter Motordrehzahl (n_{M} ≈ n_{L_min}) bis nahe an das Volllastmoment M_{VL}(n_{L_min}) belastet wird, und dass die weitere Drehzahlführung des Antriebsmotors in Abhängigkeit von der Abweichung des aktuellen Motormomentes (M_{M} ≈ M_{VL}(n_{L_min})) von dem ermittelten Anfahrmoment (M_{Anf}) erfolgt. Eine entsprechende Drehzahl- und Drehmomentführung des Verbrennungsmotors VM ist in Fig. 3 in einem Motordynamik-Kennfeld und in den Figuren 4a und 4b mit den jeweiligen Zeitverläufen der Motordrehzahl n_{M}, der Getriebeeingangsdrehzahl n_{GE} und des Motormomentes M_{M} dargestellt und wird nachfolgend weiter erläutert.

Ausgehend von der Leerlaufdrehzahl (n_{M} = n_{idle}) und dem Leerlaufmoment (M_{M} = M_{idle} ≈ 0) zum Zeitpunkt t0 (Betriebspunkt 1) wird simultan das Motormoment M_{M}, z.B. durch eine Erhöhung der Einspritzmenge, erhöht und die Reibungskupplung K entsprechend geschlossen, um relativ schnell, d.h. mit hohem Momentengradienten *d*M_{M}/*d*t, zum Zeitpunkt t1' (Betriebspunkt 2') das Saugmoment Mₛ, wie es in Fig. 3 dargestellt ist, bei einer geringfügig über der Ladegrenzdrehzahl n_{L_min} liegenden Motordrehzahl (n_{M} = n_{L_min} + Δn_{M}) oder, wie es in Fig. 3a dargestellt ist, bei der Ladegrenzdrehzahl (n_{M} = n_{L_min}) zu erreichen.

Durch die in Fig. 3 eingezeichneten drei Kurvenverläufe zwischen den Betriebspunkten 1 und 2' soll darauf hingewiesen werden, dass der Drehzahl- und Drehmomentverlauf in diesem Bereich an sich beliebig ist, jedoch zur Beschleunigung des Anfahrvorgangs der Verlauf mit dem schnellstmöglichen Erreichen des Betriebspunktes 2' zu bevorzugen ist.

Anschließend wird das Motormoment M_{M} in Verbindung mit einem entsprechend weiteren Schließen der Reibungskupplung K bei konstanter Motordrehzahl (n_{M} = n_{L_min} + Δn_{M}; n_{M} = n_{L_min}) erhöht, bis dieses zunächst zum Zeitpunkt t2' das Fahrwiderstandsmoment M_{FW} überschreitet und demzufolge das Kraftfahrzeug sowie die Eingangswelle des Stufenschaltgetriebes G nachfolgend beschleunigt wird, und bis dieses zum Zeitpunkt t3' (Betriebspunkt 3) nahezu das Volllastmoment M_{VL}(n_{L_min}) erreicht.

Wenn das aktuelle Motormoment M_{VL}(n_{L_min}) weitgehend dem ermittelten Anfahrmoment M_{Anf} entspricht (M_{Anf} ≈ M_{VL}(n_{L_min})), wird der Antriebsmotor während der Schlupfphase auf der aktuellen Motordrehzahl (n_{M} = n_{L_min}; n_{M} = n_{L_min} + Δn_{M}) und dem aktuellen Motormoment (M_{M} ≈ M_{VL}(n_{L_min})) gehalten, bis sich an der Reibungskupplung K Synchronlauf zwischen deren Eingangs- und Ausgangsseite eingestellt hat sowie diese vollständig geschlossen wird.

Wenn das aktuelle Motormoment M_{VL}(n_{L_min}) jedoch deutlich über dem ermittelten Anfahrmoment M_{Anf} liegt (M_{Anf} < M_{VL}(n_{L_min})), wird der Antriebsmotor durch ein weiteres Schließen der Reibungskupplung K entlang der Volllastkennlinie M_{VL}(n_{M}) auf eine niedrigere Motordrehzahl (n_{M} < n_{L_min}) und ein niedrigeres Motormoment (M_{M} < M_{VL}(n_{L_min})) gedrückt, bis sich im Betriebspunkt 3' an der Reibungskupplung K der genannte Synchronlauf eingestellt hat und diese vollständig geschlossen wird.

Wenn das aktuelle Motormoment M_{VL}(n_{L_min}) dagegen deutlich unter dem ermittelten Anfahrmoment M_{Anf} liegt (M_{Anf} > M_{VL}(n_{L_min})), wird der Antriebsmotor durch eine Erhöhung der Motorleistung und ein weiteres Schließen der Reibungskupplung K auf eine höhere Motordrehzahl (n_{M} > n_{L_min}) und ein höheres Motormoment (M_{M} > M_{VL}(n_{L_min})) eingestellt, bis sich im Betriebspunkt 3" an der Reibungskupplung K der Synchronlauf zwischen deren Eingangs- und Ausgangsseite eingestellt hat sowie diese vollständig geschlossen wird.

Die nachfolgende Beschleunigung des Kraftfahrzeugs erfolgt dann jeweils zunächst mit dem eingestellten Volllastmoment M_{VL}(n_{M}), bevor auf eine Fahrsteuerung in Abhängigkeit von der Fahrpedalstellung und/oder des Änderungsgradienten der Fahrpedalstellung übergegangen wird.

Eine zwischen den Betriebspunkten 2' und 3 von Fig. 3 in der Größenordnung von 50 min⁻¹ bis 100 min⁻¹ liegende und dargestellte Drehzahlerhöhung Δn_{M} der Motordrehzahl n_{M} über die Ladegrenzdrehzahl n_{L_min} dient als Steuerungsreserve, mit der ein Absinken der Motordrehzahl n_{M} unter die Ladegrenzdrehzahl n_{L_min} und demzufolge ein Rückfall des Motormomentes M_{M} auf das Saugmoment M_{S} vermieden wird.

Das Ansteuern des Volllastmomentes M_{VL}(_{NL_min}) im Betriebspunkt 3 ist auch bei niedrigerem Anfahrmoment (M_{S} < M_{Anf} < M_{VL}) zweckmäßig, weil das Motormoment M_{M} in diesem Bereich bei sinkender Schlupfdrehzahl Δn_{K} an der Reibungskupplung K schwierig konstant regelbar ist, und der im Hinblick auf die Belastung der Reibungskupplung negative Effekt des erhöhten Anfahrmomentes (M_{Anf} ≈ M_{VL}(_{NL_min})) durch den positiven Effekt der kürzeren Schlupfdauer ausgeglichen wird.

Wenn der Verbrennungsmotor VM eine variable Motorcharakteristik aufweist, die z.B. durch ein aktivierbares Pressure Boost System (PBS) mit einer Drucklufteinblasung in den Ansaugtrakt des Antriebsmotors gegeben sein kann, ist eine Anpassung der erfindungsgemäßen Anfahrsteuerung an die jeweils aktuelle Motorcharakteristik vorgesehen.

Hierzu ist in Fig. 5 das Motordynamik-Kennfeld eines turboaufgeladenen Verbrennungsmotors VM mit aktiviertem PBS abgebildet, durch das die Ladegrenzdrehzahl n_{L_min} bis auf die Leerlaufdrehzahl n_{idle} bzw. unter die Leerlaufdrehzahl n_{idle} abgesenkt ist (n_{L_min} ≤ n_{idle}). Demnach entfallen die sonst vorhandenen Betriebsbereiche A und D, und das Motormoment M_{M} des Antriebsmotors kann jeweils kurzfristig bis an das Volllastmoment M_{VL}(n_{M}) erhöht werden, wie es stark vereinfacht in dem Momentenverlauf M_{M}(t) in Teilbild (b) von Fig. 5 dargestellt ist.

Demzufolge wird nach dem entsprechend angepassten erfindungsgemäßen Verfahren die Leerlaufdrehzahl n_{idle} des Antriebsmotors oder eine geringfügig über der Leerlaufdrehzahl n_{idle} liegende Motordrehzahl (n_{M} = n_{idle} + Δn_{M}) als Anfahrdrehzahl n_{Anf} bestimmt (n_{Anf} = n_{idle} n_{Anf} = n_{idle} + Δn_{M}) und ausgehend von dem Leerlaufmoment (M_{M} = M_{idle} ≈ 0) in Betriebspunkt 1 das betreffende Volllastmoment M_{VL}(n_{idle}) in Betriebspunkt 2* eingestellt, wenn das ermittelte Anfahrmoment M_{Anf} das Volllastmoment M_{VL}(n_{idle}) des Antriebsmotors nicht übersteigt (M_{Anf} ≤ M_{VL}(n_{idle})). Wenn das betreffende Volllastmoment M_{VL}(n_{idle}) dann immer noch unter dem ermittelten Anfahrmoment M_{Anf} liegt (M_{Anf} > M_{VL}(n_{idle})), wird der Antriebsmotor analog zu der zuvor beschriebenen Vorgehensweise durch eine Erhöhung der Motorleistung und ein weiteres Schließen der Reibungskupplung entlang der Volllastkennlinie M_{VL}(n_{M}) auf eine höhere Motordrehzahl (n_{M} > n_{idle}) und ein höheres Motormoment (M_{M} > M_{VL}(n_{idle})) eingestellt (Betriebspunkt 3*), um das vorgesehene Anfahrmoment M_{Anf} zu erreichen (M_{M} = M_{Anf}).

### Bezugszeichen

- 1: Betriebspunkt
- 2: Betriebspunkt
- 2': Betriebspunkt
- 2*: Betriebspunkt
- 3: Betriebspunkt
- 3': Betriebspunkt
- 3": Betriebspunkt
- 3*: Betriebspunkt
- A: Betriebsbereich
- B: Betriebsbereich
- C: Betriebsbereich
- D: Betriebsbereich
- E: Betriebsbereich
- F: Betriebsbereich
- G: Stufenschaltgetriebe, Fahrgetriebe
- GA: Achsgetriebe, Achsdifferenzial
- K: Reibungskupplung, Anfahrelement
- M: Drehmoment
- M_{Anf}: Anfahrmoment
- M_{FW}: Fahrwiderstandsmoment
- M_{idle}: Leerlaufmoment
- M_{K}: Kupplungsmoment
- M_{M}: Motormoment
- M_{Max}: Maximalmoment
- M_{S}: Saugmoment
- M_{VL}: Volllastmoment
- n: Drehzahl
- NA: Nebenaggregat
- n_{GE}: Getriebeeingangsdrehzahl
- n_{idle}: Leerlaufdrehzahl
- n_{L_min}: Ladegrenzdrehzahl
- nₗᵢₘ: Abregeldrehzahl
- n_{M}: Motordrehzahl
- nₘₐₓ: Maximaldrehzahl
- nₘᵢₙ: Mindestdrehzahl
- PBS: Pressure Boost System
- PTO: Nebenabtrieb, Power Take-Off
- t: Zeit
- t0: Zeitpunkt
- t1: Zeitpunkt
- t1': Zeitpunkt
- t2: Zeitpunkt
- t2': Zeitpunkt
- t3: Zeitpunkt
- t3': Zeitpunkt
- t4: Zeitpunkt
- V: Betriebsbereich
- VM: Verbrennungsmotor, Antriebsmotor
- Δn_{K}: Schlupfdrehzahl
- Δn_{M}: Drehzahlerhöhung

## Patentansprüche

1. Verfahren zur Anfahrsteuerung eines Kraftfahrzeugs, dessen Antriebsstrang einen als turboaufgeladener Verbrennungsmotor (VM) ausgebildeten Antriebsmotor, ein als automatisierte Reibungskupplung ausgebildetes Anfahrelement (K), und ein als automatisiertes Stufenschaltgetriebe (G) ausgebildetes Fahrgetriebe umfasst, wobei bei einem durch die Betätigung des Fahrpedals ausgelösten Anfahren aus dem Stillstand nach dem Einlegen eines ermittelten Anfahrgangs der Antriebsmotor in Verbindung mit einem koordinierten Einrücken der Reibungskupplung von der Leerlaufdrehzahl (n_{idle}) auf eine Anfahrdrehzahl und von dem Leerlaufmoment auf ein ermitteltes Anfahrmoment geführt wird, und in Abhängigkeit von den dynamischen Betriebseigenschaften des Antriebsmotors die niedrigstmögliche Motordrehzahl (n_{M}), die von der Leerlaufdrehzahl (n_{idle}) aus unter Last spontan einstellbar ist, und bei welcher der Antriebsmotor das ermittelte Anfahrmoment erzeugen kann, als Anfahrdrehzahl bestimmt und eingestellt wird, **dadurch gekennzeichnet, dass** die Leerlaufdrehzahl (n_{idle}) des Antriebsmotors oder eine geringfügig über der Leerlaufdrehzahl (n_{idle}) liegende Motordrehzahl (n_{M} = n_{idle} + Δn_{M}) als Anfahrdrehzahl bestimmt und eingestellt wird, wenn das ermittelte Anfahrmoment das Saugmoment (M_{S}) des Antriebsmotors nicht übersteigt bzw. dass bei einer betriebsbedingt von dem Antriebsmotor einzuhaltenden Mindestdrehzahl (nₘᵢₙ), die über der Leerlaufdrehzahl (n_{idle}) des Antriebsmotors liegt (nₘᵢₙ > n_{idle}), diese Mindestdrehzahl (nₘᵢₙ) oder eine geringfügig über dieser Mindestdrehzahl (nₘᵢₙ) liegende Motordrehzahl (n_{M} = nₘᵢₙ + Δn_{M}) als Anfahrdrehzahl bestimmt und eingestellt wird, wenn das ermittelte Anfahrmoment das Saugmoment (M_{S}) des Antriebsmotors nicht übersteigt.

2. Verfahren zur Anfahrsteuerung eines Kraftfahrzeugs, dessen Antriebsstrang einen als turboaufgeladener Verbrennungsmotor (VM) ausgebildeten Antriebsmotor, ein als automatisierte Reibungskupplung ausgebildetes Anfahrelement (K), und ein als automatisiertes Stufenschaltgetriebe (G) ausgebildetes Fahrgetriebe umfasst, wobei bei einem durch die Betätigung des Fahrpedals ausgelösten Anfahren aus dem Stillstand nach dem Einlegen eines ermittelten Anfahrgangs der Antriebsmotor in Verbindung mit einem koordinierten Einrücken der Reibungskupplung von der Leerlaufdrehzahl (n_{idle}) auf eine Anfahrdrehzahl und von dem Leerlaufmoment auf ein ermitteltes Anfahrmoment geführt wird, und in Abhängigkeit von den dynamischen Betriebseigenschaften des Antriebsmotors die niedrigstmögliche Motordrehzahl (n_{M}), die von der Leerlaufdrehzahl (n_{idle}) aus unter Last spontan einstellbar ist, und bei welcher der Antriebsmotor das ermittelte Anfahrmoment erzeugen kann, als Anfahrdrehzahl bestimmt und eingestellt wird, **dadurch gekennzeichnet, dass** der Antriebsmotor zunächst bis an die Ladegrenzdrehzahl (n_{L_min}) oder eine geringfügig über der Ladegrenzdrehzahl (n_{L_min}) liegende Motordrehzahl (n_{M}) beschleunigt (n_{M} = n_{L_min} ; n_{M} = n_{L_min} + Δn_{M}) und bis an das Saugmoment (M_{S}) belastet wird, sowie anschließend bei weitgehend konstanter Motordrehzahl (n_{M} ≈ n_{L_min}) bis nahe an das Volllastmoment (M_{VL}(n_{L_min})) belastet wird, wenn das ermittelte Anfahrmoment das Saugmoment (M_{S}) des Antriebsmotors übersteigt, und dass die weitere Drehzahlführung des Antriebsmotors in Abhängigkeit von der Abweichung des aktuellen Motormomentes (M_{M} ≈ M_{VL}(n_{L_min})) von dem ermittelten Anfahrmoment erfolgt.

3. Verfahren nach Anspruch 2, **dadurch gekennzeichnet, dass** der Antriebsmotor auf der aktuellen Motordrehzahl (n_{M} = n_{L_min}; n_{M} = n_{L_min} + Δn_{M}) und dem aktuellen Motormoment (M_{M} ≈ M_{VL}(n_{L_min})) gehalten wird, wenn das aktuelle Motormoment (M_{VL}(n_{L_min})) weitgehend dem ermittelten Anfahrmoment entspricht.

4. Verfahren nach Anspruch 2, **dadurch gekennzeichnet, dass** der Antriebsmotor durch ein weiteres Schließen der Reibungskupplung auf eine niedrigere Motordrehzahl (n_{M} < n_{L_min}) und ein niedrigeres Motormoment (M_{M} < M_{VL}(n_{L_min})) gedrückt wird, wenn das aktuelle Motormoment (M_{VL}(n_{L_min})) deutlich über dem ermittelten Anfahrmoment liegt.

5. Verfahren nach Anspruch 2, **dadurch gekennzeichnet, dass** der Antriebsmotor durch eine Erhöhung der Motorleistung und ein weiteres Schließen der Reibungskupplung auf eine höhere Motordrehzahl (n_{M} > n_{L_min}) und ein höheres Motormoment (M_{M} > M_{VL}(n_{L_min})) eingestellt wird, wenn das aktuelle Motormoment (M_{VL}(n_{L_min})) deutlich unter dem ermittelten Anfahrmoment liegt.

6. Verfahren nach einem der Ansprüche 2 bis 5, **dadurch gekennzeichnet, dass** bei einer betriebsbedingt von dem Antriebsmotor einzuhaltenden Maximaldrehzahl (nₘₐₓ), die unter der vorgesehenen Anfahrdrehzahl des Antriebsmotors liegt, eine Anpassung der Anfahrdrehzahl und/oder des Anfahrmomentes und/oder des Anfahrgangs erfolgt.

7. Verfahren nach Anspruch 6, **dadurch gekennzeichnet, dass** das Anfahren mit dem vorgesehenen Anfahrgang unter Einhaltung der Maximaldrehzahl (nₘₐₓ) durchgeführt wird, wenn das bei der Maximaldrehzahl (nₘₐₓ) maximal einstellbare Motormoment (M_{M}(nₘₐₓ)) für das Anfahren ausreicht (M_{M}(nₘₐₓ) > M_{FW}).

8. Verfahren nach Anspruch 6, **dadurch gekennzeichnet, dass** bevorzugt vor dem Beginn des Anfahrvorgangs in einen niedrigeren Anfahrgang geschaltet und das Anfahren mit diesem Anfahrgang unter Einhaltung der Maximaldrehzahl (nₘₐₓ) durchgeführt wird, wenn das bei der Maximaldrehzahl (nₘₐₓ) maximal einstellbare Motormoment (M_{M}(nₘₐₓ)) in Verbindung mit dem ursprünglich vorgesehenen Anfahrgang für das Anfahren nicht ausreicht (M_{M}(nₘₐₓ) ≤ M_{FW}).

9. Verfahren nach Anspruch 6 oder 8, **dadurch gekennzeichnet, dass** mindestens ein Nebenaggregat und/oder ein Nebenabtrieb abgekoppelt wird, wenn das bei der Maximaldrehzahl (nₘₐₓ) maximal einstellbare Motormoment (M_{M}(nₘₐₓ)) für das Anfahren nicht ausreicht (M_{M}(nₘₐₓ) ≤ M_{FW}).

10. Verfahren nach einem der Ansprüche 6, 8 oder 9, **dadurch gekennzeichnet, dass** das die Einhaltung der Maximaldrehzahl (nₘₐₓ) erfordernde Aggregat vorübergehend abgeschaltet wird, wenn das bei der Maximaldrehzahl (nₘₐₓ) maximal einstellbare Motormoment (M_{M}(nₘₐₓ)) für das Anfahren nicht ausreicht (M_{M}(nₘₐₓ) ≤ M_{FW}).

11. Verfahren nach einem der Ansprüche 6, 8, 9 oder 1210 **dadurch gekennzeichnet, dass** die Maximaldrehzahl (nₘₐₓ) vorübergehend überschritten wird, wenn das bei der Maximaldrehzahl (nₘₐₓ) maximal einstellbare Motormoment (M_{M}(nₘₐₓ)) für das Anfahren nicht ausreicht (M_{M}(nₘₐₓ) ≤ M_{FW}).

12. Verfahren nach einem der Ansprüche 1 bis 11, **dadurch gekennzeichnet, dass** die Anfahrsteuerung gemäß wenigstens einem der vorgenannten Verfahrensmerkmale bei einem mit einem Parallel-Hybridantrieb oder mit einem Boostantrieb versehenen Kraftfahrzeug auf den von dem Verbrennungsmotor erzeugten Anteil des Anfahrmomentes angewendet wird, wenn beim Anfahren zusätzlich zu dem Verbrennungsmotor der betreffende Parallelantrieb oder der Boostantrieb verwendet wird.

13. Verfahren nach einem der Ansprüche 1 bis 12, **dadurch gekennzeichnet, dass** die Anfahrsteuerung gemäß wenigstens einem der vorgenannten Verfahrensmerkmale bei einem Verbrennungsmotor mit variabler Motorcharakteristik an die jeweils aktuelle Motorcharakteristik angepasst wird.

## Claims

1. Method for controlling the starting of a motor vehicle whose drive train comprises a drive engine embodied as a turbo-charged internal combustion engine (VM), a starter element (K) embodied as an automated friction clutch, and a transmission which is embodied as an automated step-by-step variable transmission (G), wherein when starting out of the stationary state is triggered by activation of the accelerator pedal, after the engagement of a determined starter gear the drive engine is adjusted from the idling rotational speed (n_{idle}) to a starting rotational speed and from the idling torque to a determined starting torque in conjunction with coordinated engagement of the friction clutch, and the lowest possible engine rotational speed (n_{M}) which can be spontaneously set under load starting from the idling rotational speed (n_{idle}) as a function of the dynamic operating properties of the drive engine, and at which engine rotational speed (n_{M}) the drive engine can generate the determined starting torque, is determined and set as a starting rotational speed, **characterized in that** the idling rotational speed (n_{idle}) of the drive engine or an engine rotational speed (n_{M} = n_{idle} + Δn_{M}) which is slightly above the idling rotational speed (n_{idle}) is determined and set as a starting rotational speed if the determined starting torque does not exceed the intake torque (M_{S}) of the drive engine or that in the case of a minimum rotational speed (nₘᵢₙ) which is to be maintained by the drive engine for operational reasons and which is above the idling rotational speed (n_{idle}) of the drive engine (nₘᵢₙ > ni_{dle}), this minimum rotational speed (nₘᵢₙ) or an engine rotational speed (n_{M} = nₘᵢₙ + Δn_{M}) slightly above the minimum rotational speed (nₘᵢₙ) is determined and set as a starting rotational speed if the determined starting torque does not exceed the intake torque (M_{S}) of the drive engine.

2. Method for controlling the starting of a motor vehicle whose drive train comprises a drive engine embodied as a turbo-charged internal combustion engine (VM), a starter element (K) embodied as an automated friction clutch, and a transmission which is embodied as an automated step-by-step variable transmission (G), wherein when starting out of the stationary state is triggered by activation of the accelerator pedal, after the engagement of a determined starter gear the drive engine is adjusted from the idling rotational speed (n_{idle}) to a starting rotational speed and from the idling torque to a determined starting torque in conjunction with coordinated engagement of the friction clutch, and the lowest possible engine rotational speed (n_{M}) which can be spontaneously set under load starting from the idling rotational speed (n_{idle}) as a function of the dynamic operating properties of the drive engine, and at which engine rotational speed (n_{M}) the drive engine can generate the determined starting torque, is determined and set as a starting rotational speed, **characterized in that** the drive engine firstly accelerates as far as the charging limit rotational speed (n_{L_min}) or an engine rotational speed (n_{M}) slightly above the charging limit rotational speed (n_{L_min}) (n_{M} = n_{L_min}; n_{M} = n_{L_min} + Δn_{M}) and is loaded up to the suction torque (M_{S}), and subsequently is loaded to close to the full load torque (M_{VL}(n_{L_min})) at a largely constant engine rotational speed (n_{M} ≈ n_{L_min}) if the determined starting torque exceeds the intake torque (M_{S}) of the drive engine, and **in that** the further control of the rotational speed of the drive engine is carried out as a function of the deviation of the current engine torque (M_{M} ≈ M_{VL} (n_{L_min})) from the determined starting torque.

3. Method according to Claim 2, **characterized in that** the drive engine is largely held at the current rotational speed (n_{M} = n_{L_min}; n_{M} = n_{L_min} + Δn_{M}) and the current engine torque (M_{M} ≈ M_{VL}(n_{L_min})) if the current engine torque (M_{VL}(n_{L_min})) largely corresponds to the determined starting torque.

4. Method according to Claim 2, **characterized in that** the drive engine is forced by further closing of the friction clutch to a lower engine rotational speed (n_{M} < n_{L_min}) and to a lower engine torque (M_{M} < M_{VL}(n_{L_min})) if the current engine torque (M_{VL}(n_{L_min})) is significantly above the determined starting torque.

5. Method according to Claim 2, **characterized in that** the drive engine is set to a relatively high engine rotational speed (n_{M} > n_{L_min}) and to a relatively high engine torque (M_{M} > M_{VL}(n_{L_min})) by increasing the engine power and further closing of the friction clutch if the current engine torque (M_{VL}(n_{L_min})) is significantly below the determined starting torque.

6. Method according to one of Claims 2 to 5, **characterized in that** in the case of a maximum rotational speed (nₘₐₓ) which is to be maintained by the drive engine for operational reasons and which is below the provided starting rotational speed of the drive engine, the starting rotational speed and/or the starting torque and/or the starter gear are adapted.

7. Method according to Claim 6, **characterized in that** the starting is carried out with the provided starter gear while maintaining the maximum rotational speed (nₘₐₓ) if the engine torque (M_{M} (nₘₐₓ)) which is the maximum which can be set at the maximum rotational speed (nₘₐₓ) is sufficient for the starting (M_{M} (nₘₐₓ) > M_{FW}).

8. Method according to Claim 6, **characterized in that** shifting into a relatively low starter gear preferably takes place before the beginning of the starting process, and the starting is carried out with the starter gear while maintaining the maximum rotational speed (nₘₐₓ) if the engine torque (M_{M}(nₘₐₓ)) which is the maximum which can be set at the maximum rotational speed (nₘₐₓ) is not sufficient, in conjunction with the originally provided starter gear, for the starting (M_{M}(nₘₐₓ) ≤ M_{FW}).

9. Method according to Claim 6 or 8, **characterized in that** at least one secondary assembly and/or secondary output is uncoupled if the engine torque (M_{M}(nₘₐₓ)) which is the maximum which can be set at the maximum rotational speed (nₘₐₓ) is not sufficient for the starting (M_{M}(nₘₐₓ) ≤ M_{FW}).

10. Method according to one of Claims 6, 8 or 9, **characterized in that** the assembly which requires the maximum rotational speed (nₘₐₓ) to be maintained is temporarily shut down if the engine torque (M_{M}(nₘₐₓ)) which is the maximum which can be set at the maximum rotational speed (nₘₐₓ) is not sufficient for the starting (M_{M}(nₘₐₓ) ≤ M_{FW}).

11. Method according to one of Claims 6, 8, 9 or 10, **characterized in that** the maximum rotational speed (nₘₐₓ) is temporarily exceeded if the engine torque (M_{M}(nₘₐₓ)) which is the maximum which can be set at the maximum rotational speed (nₘₐₓ) is not sufficient for the starting (M_{M}(nₘₐₓ) ≤ M_{FW}).

12. Method according to one of Claims 1 to 11, **characterized in that** the controlling of the starting according to at least one of the preceding method features is applied to the portion of the starting torque generated by the internal combustion engine in a motor vehicle which is provided with a parallel hybrid drive or with a booster drive if the respective parallel drive or the booster drive is used in addition to the internal combustion engine during starting.

13. Method according to one of Claims 1 to 12, **characterized in that** in an internal combustion engine with a variable engine characteristic the controlling of the starting according to at least one of the preceding method features is adapted to the respective current engine characteristic.

## Revendications

1. Procédé de commande de démarrage d'un véhicule à moteur, dont la chaîne cinématique comprend un moteur d'entraînement formé par un moteur à combustion interne turbocompressé (VM), un élément de démarrage formé par un accouplement à friction automatisé (K), et une transmission formée par une boîte de vitesses automatisée à rapports étagés (G), dans lequel, lors d'un démarrage à partir de l'arrêt causé par l'actionnement de la pédale d'accélérateur après l'engagement d'un rapport de démarrage déterminé, le moteur d'entraînement est porté, en liaison avec un engagement coordonné de l'accouplement à friction, de la vitesse de rotation de ralenti (n_{idle}) à une vitesse de rotation de démarrage et du couple de ralenti à un couple de démarrage déterminé et, en fonction des propriétés de fonctionnement dynamiques du moteur d'entraînement, on détermine et on règle la plus basse vitesse de rotation possible du moteur (n_{M}), qui peut être réglée spontanément par la vitesse de rotation de ralenti (n_{idle}) sous charge, et pour laquelle le moteur d'entraînement peut produire le couple de démarrage déterminé, comme vitesse de rotation de démarrage, **caractérisé en ce que** l'on détermine et on règle la vitesse de rotation de ralenti (n_{idle}) du moteur d'entraînement ou une vitesse de rotation du moteur située légèrement au-dessus de la vitesse de rotation de ralenti (n_{idle}) (n_{M} = n_{idle} + Δn_{M}) comme vitesse de rotation de démarrage, lorsque le couple de démarrage déterminé ne dépasse pas le couple d'aspiration (Mₛ) du moteur d'entraînement ou que, à une vitesse de rotation minimale (nₘᵢₙ) à respecter par le moteur d'entraînement liée aux conditions de fonctionnement, qui se situe au-dessus de la vitesse de rotation de ralenti (n_{idle}) du moteur d'entraînement (nₘᵢₙ > n_{idle}), on détermine et on règle cette vitesse de rotation minimale (nₘᵢₙ) ou une vitesse de rotation du moteur située légèrement au-dessus de cette vitesse de rotation minimale (nₘᵢₙ) (n_{M} = n_{idle} + Δn_{M}) comme vitesse de rotation de démarrage, lorsque le couple de démarrage déterminé ne dépasse pas le couple d'aspiration (M_{S}) du moteur d'entraînement.

2. Procédé de commande de démarrage d'un véhicule à moteur, dont la chaîne cinématique comprend un moteur d'entraînement formé par un moteur à combustion interne turbocompressé (VM), un élément de démarrage formé par un accouplement à friction automatisé (K), et une transmission formée par une boîte de vitesses automatisée à rapports étagés (G), dans lequel, lors d'un démarrage à partir de l'arrêt causé par l'actionnement de la pédale d'accélérateur après l'engagement d'un rapport de démarrage déterminé, le moteur d'entraînement est porté, en liaison avec un engagement coordonné de l'accouplement à friction, de la vitesse de rotation de ralenti (n_{idle}) à une vitesse de rotation de démarrage et du couple de ralenti à un couple de démarrage déterminé et, en fonction des propriétés de fonctionnement dynamiques du moteur d'entraînement, on détermine et on règle la plus basse vitesse de rotation possible du moteur (n_{M}), qui peut être réglée spontanément par la vitesse de rotation de ralenti (n_{idle}) sous charge, et pour laquelle le moteur d'entraînement peut produire le couple de démarrage déterminé, comme vitesse de rotation de démarrage, **caractérisé en ce que** l'on accélère le moteur d'entraînement d'abord jusqu'à la vitesse de rotation limite de suralimentation (n_{L_min}) ou une vitesse de rotation du moteur (n_{M}) légèrement supérieure à la vitesse de rotation limite de suralimentation (n_{L_min}) (n_{M} = n_{L_min}; n_{M} = n_{L_min} + Δn_{M}) et on le charge jusqu'au couple d'aspiration (M_{S}), et ensuite, avec une vitesse de rotation du moteur largement constante (n_{M} ≈ n_{L_min}), on le charge jusqu'à environ le couple à pleine charge (M_{VL} (n_{L_min})), lorsque le couple de démarrage déterminé dépasse le couple d'aspiration (M_{S}) du moteur d'entraînement, et **en ce que** l'on effectue la conduite ultérieure de la vitesse de rotation du moteur d'entraînement en fonction de l'écart entre le couple moteur actuel (M_{M} ≈ M_{VL}(n_{L_min})) et le couple de démarrage déterminé.

3. Procédé selon la revendication 2, **caractérisé en ce que** l'on maintient le moteur d'entraînement à la vitesse de rotation du moteur actuelle (n_{M} = n_{L_min}; n_{M} = n_{L_min} + Δn_{M}) et au couple moteur actuel (M_{M} ≈ M_{VL} (n_{L_min})), lorsque le couple moteur actuel (M_{VL} (n_{L_min})) correspond largement au couple de démarrage déterminé.

4. Procédé selon la revendication 2, **caractérisé en ce que** l'on repousse le moteur d'entraînement, par une nouvelle fermeture de l'accouplement à friction, à une vitesse de rotation plus faible (n_{M} < n_{L_min}) et à un couple moteur plus faible (M_{M} < M_{VL}(n_{L_min})), lorsque le couple moteur actuel (M_{VL}(n_{L_min})) se situe nettement au-dessus du couple de démarrage déterminé.

5. Procédé selon la revendication 2, **caractérisé en ce que** l'on règle le moteur d'entraînement, par une augmentation de la puissance du moteur et une nouvelle fermeture de l'accouplement à friction, à une vitesse de rotation du moteur plus élevée (n_{M} > n_{L_min}) et un couple moteur plus élevé (M_{M} > M_{VL}(n_{L_min}) lorsque le couple moteur actuel (M_{VL} (n_{L_min})) se situe nettement en dessous du couple de démarrage déterminé.

6. Procédé selon l'une quelconque des revendications 2 à 5, **caractérisé en ce que**, à une vitesse de rotation maximale (nₘₐₓ) à respecter par le moteur d'entraînement liée aux conditions de fonctionnement, qui se situe en dessous de la vitesse de rotation de démarrage prévue du moteur d'entraînement, on opère une adaptation de la vitesse de rotation de démarrage et/ou du couple de démarrage et/ou du rapport de démarrage.

7. Procédé selon la revendication 6, **caractérisé en ce que** l'on effectue le démarrage avec le rapport de démarrage prévu en respectant la vitesse de rotation maximale (nₘₐₓ), lorsque le couple moteur maximal (M_{M}(nₘₐₓ)) réglable à la vitesse de rotation maximale (nₘₐₓ) _{suffit} pour le démarrage (M_{M}(ₙₘₐₓ)) > M_{FW}).

8. Procédé selon la revendication 6, **caractérisé en ce que**, de préférence avant le commencement de l'opération de démarrage, on enclenche un rapport de démarrage plus bas et on effectue le démarrage avec ce rapport de démarrage en respectant la vitesse de rotation maximale (nₘₐₓ), lorsque le couple moteur maximal (M_{M}(nₘₐₓ)) réglable à la vitesse de rotation maximale (nₘₐₓ) en liaison avec le rapport de démarrage initialement prévu ne suffit pas pour le démarrage (M_{M} (nₘₐₓ) ≤ M_{FW}).

9. Procédé selon la revendication 6 ou 8, **caractérisé en ce que** l'on déconnecte au moins un groupe secondaire et/ou un entraînement secondaire, lorsque le couple moteur maximal (M_{M}(nₘₐₓ)) réglable à la vitesse de rotation maximale (nₘₐₓ) ne suffit pas pour le démarrage (M_{M} (nₘₐₓ)) ≤ M_{FW}).

10. Procédé selon l'une quelconque des revendications 6, 8 ou 9, **caractérisé en ce que** l'on déconnecte temporairement le groupe nécessitant le respect de la vitesse de rotation maximale (nₘₐₓ), lorsque le couple moteur maximal (M_{M}(nₘₐₓ)) réglable à la vitesse de rotation maximale (nₘₐₓ) ne suffit pas pour le démarrage (M_{M} (nₘₐₓ) ≤ M_{FW}).

11. Procédé selon l'une quelconque des revendications 6, 8, 9 ou 10, **caractérisé en ce que** l'on dépasse temporairement la vitesse de rotation maximale (nₘₐₓ), lorsque le couple moteur maximal (M_{M}(nₘₐₓ)) réglable à la vitesse de rotation maximale (nₘₐₓ) ne suffit pas pour le démarrage (M_{M} (nₘₐₓ) ≤ M_{FW}).

12. Procédé selon l'une quelconque des revendications 1 à 11, **caractérisé en ce que** l'on applique la commande de démarrage selon au moins une des caractéristiques de procédé précitées dans un véhicule à moteur muni d'un entraînement hybride parallèle ou d'un entraînement d'appoint à la part du couple de démarrage produite par le moteur à combustion interne, lorsque l'on utilise au démarrage, en plus du moteur à combustion interne, l'entraînement parallèle ou l'entraînement d'appoint concerné.

13. Procédé selon l'une quelconque des revendications 1 à 12, **caractérisé en ce que** l'on adapte la commande de démarrage selon au moins une des caractéristiques de procédé précitées dans un moteur à combustion interne avec une caractéristiques de moteur variable à la caractéristique de moteur respectivement actuelle.
